# EUROPÄISCHE PATENTSCHRIFT

(11) **EP 1 430 005 B1**
(45) Veröffentlichungstag und Bekanntmachung des Hinweises auf die Patenterteilung: **20.02.2008**
(21) Anmeldenummer: 02774349.1
(22) Anmeldetag: 16.09.2002
(51) Int. Cl.: C04B 35/622, C08B 1/00, C08J 3/21, D01F 1/02, D01F 2/02

(54) **VERFAHREN UND VORRICHTUNG ZUR HERSTELLUNG GERADER KERAMISCHER FASERN**
METHOD AND DEVICE FOR PRODUCING STRAIGHT CERAMIC FIBRES
PROCEDE ET DISPOSITIF DE PRODUCTION DE FIBRES CERAMIQUES DROITES

(30) Priorität: 15.09.2001 DE 10145640
(43) Veröffentlichungstag der Anmeldung: 23.06.2004
(73) Patentinhaber: THÜRINGISCHES INSTITUT FÜR TEXTIL- UND KUNSTSTOFF-FORSCHUNG e.V., 07407 Rudolstadt (DE)
(72) Erfinder: NIEMZ, Frank-Günter, 07407 Rudolstadt (DE); VORBACH, Dieter, 07407 Rudolstadt (DE)
(74) Vertreter: Plate, Jürgen
(86) Internationale Anmeldenummer: PCT/DE2002/003419
(87) Internationale Veröffentlichungsnummer: WO 2003/024891

(56) Entgegenhaltungen:
- EP-A- 0 712 889
- US-A- 5 827 797
- US-A1- 2002 193 030

## Beschreibung

Die vorliegende Erfindung betrifft ein Verfahren und Vorrichtungen zur kontinuierlichen Herstellung gerader keramischer Fasern in unmittelbar hintereinander folgenden Herstellungsetappen. Dabei erfolgt die Erzeugung von Grünfasern nach einem Lösung-Suspensionsspinnverfahren. Die Herstellung der Keramikfaser erfolgt vorzugsweise innerhalb einer Vorrichtung unmittelbar nach der Herstellung der Grünfaser.

### [Stand der Technik]

Aus US-A-2 179 181 ist das Lösevermögen von tertiären Aminoxiden gegenüber Cellulose bekannt. Weiterhin ist in diesem Patent die Möglichkeit beschrieben, aus der erhaltenen Cellulose-Aminoxidlösung durch Koagulation einen cellulosischen Formkörper, wie beispielsweise Fasern, Folien, Filamente, zu erhalten. Im weiteren wird zur Vereinfachung der Terminus "Aminoxidverfahren" zur Beschreibung des oben erklärten Prozesses benutzt. Neben der Cellulose sind dabei keine Zusatzstoffe in der Lösung, insbesondere Keramikpulver, bekannt.

In DE-A 44 26 966 ist ein Verfahren zur Herstellung von keramischen Grünfasern nach dem Aminoxidverfahren beschrieben. Dabei ist die Herstellung von keramischen Grünfasern aus Lösungen der Cellulose in Aminoxid, die bezüglich der Cellulose ein Vielfaches an feinen keramischen Pulvern enthalten, bekannt. Auf eine Herstellung gerader Keramikfasern wurde darin nicht eingegangen. Üblicherweise werden Keramik-Grünfasern auf Wickelkörper aufgespult und danach in einem zeitlich verzögerten Schritt pyrolysiert und gesintert. Der Nachteil dieses Verfahrens ist, daß die Fäden durch den Wickelkörper eine bleibende Krümmung aufgeprägt bekommen, die auch nach dem Sinterprozeß teilweise erhalten bleibt und sich dadurch nachteilig auf die weiteren Verarbeitungsstufen der Keramikfaser auswirken kann. So ist es für viele Verarbeitungs- und Anwendungsfälle, insbesondere bei der Herstellung von piezoelektrischen Fasern, unbedingte Voraussetzung, daß eine exakte Parallellage von geraden Fasern erzielt werden muß.

Gegenstand der US-A 5 827 797 ist ein Verfahren zur Herstellung von keramischen Fasern nach dem Viskoseverfahren. Dabei wird eine Dispersion der keramischen Partikel mit Viskoselösung, d.h. mit einer stark alkalischen Cellulosexanthogenat-Lösung, vermischt und die Mischung zu Fasern versponnen. Das in den Fasern enthaltene Cellulosexanthogenat wird dann mit Hilfe von sauren Fällbadern zu Cellulose regeneriert. Beim anschließenden Pyrolysieren und Sintern werden keramische Fasern enthalten. Gerade keramische Fasern sind auch hier nicht offenbart.

### [Aufgabe der Erfindung]

Die vorliegende Erfindung stellt sich die Aufgabe, ein Verfahren und eine Vorrichtung zur kontinuierlichen Herstellung gerader Keramikfasern in unmittelbar hintereinander folgenden Herstellungsetappen zu entwickeln.

Gelöst wurde die Aufgabe mit einem Verfahren zur Herstellung von geraden Keramikfasern, dadurch gekennzeichnet, daß es die folgenden Schritte umfaßt:
a) Mischen von Keramikpulver, wäßrigem Aminoxid und Cellulose, so daß sich eine Suspension bildet;
b) Aufkonzentrieren der Suspension aus a), die unter Erwärmen gemischt, geschert und unter Abdampfen von Wasser transportiert wird, bis eine Suspension des Keramikpulvers in einer verformbaren Lösung von Cellulose in wäßrigem Aminoxid entstanden ist;
c) Pressen der gemäß b) erhaltenen Suspension durch ein Formwerkzeug zu Endlosfasern, Aufwickeln der Endlosfasern zu Strängen und Auswaschen der Stränge;
d) Trocknen der gemäß c) erhaltenen Stränge unter einer Vorspannung und definiertem Gesamtschrumpf zu geraden Grünfasern;
e) Verarbeiten der getrockneten Grünfasern unter Eigengewicht oder einer definierten Spannung durch Pyrolysieren und Sintern zu geraden Keramikfasern.

Insbesondere werden in Schritt a) Keramikpulver aus keramikbildenden niedrig- oder hochmolekularen Verbindungen, bevorzugt aus sinterfähigen anorganischen Verbindungen, besonders bevorzugt aus Oxiden, Carbiden, Boriden, Nitriden, Oxynitriden, Sialonen, Aluminiumsilikaten oder deren Mischungen und/oder aus Bleizirkoniumtitanaten, eingesetzt. Das Keramikpulver wird in einer besonderen Ausführungsform so gewählt, daß die Keramikfasern piezoelektrische Eigenschaften aufweisen.

Zur Herstellung von geraden Keramikfasern wird erfindungsgemäß eine Vorrichtung bereitgestellt, im wesentlichen enthaltend
a) eine Mischvorrichtung zur Herstellung einer Suspension aus Keramikpulver, wäßrigem Aminoxid und Cellulose,
b) eine Vorrichtung zum Aufkonzentrieren, in der die in a) hergestellte Suspension so lange unter Erwärmen intensiv gemischt, geschert und unter Abdampfen von Wasser transportiert werden kann, bis eine genau definierte Menge an Wasser abgedampft ist und eine Suspension von Keramikpulver in einer verformbaren Lösung der Cellulose in wäßrigem Aminoxid entsteht,
c) eine Vorrichtung, die der unter b) genannten nachgeschaltet ist oder mit ihr verbunden sein kann, worin die Suspension von Keramikpulver in einer verformbaren Lösung der Cellulose in wäßrigem Aminoxid durch ein Formwerkzeug zu Endlosfasern gepreßt, zu Strängen aufgewickelt und ausgewaschen werden kann,
d) eine Trockenvorrichtung, in der die in c) erhaltenen Stränge unter einer Vorspannung und definiertem Gesamtschrumpf zu geraden Grünfasern getrocknet werden können und
e) eine Pyrolyse- und Sintereinrichtung, in der die getrockneten Grünfaserstränge unter Eigengewicht oder einer definierten Spannung zu geraden Keramikfasern verarbeitet werden können.

Insbesondere umfaßt die Mischvorrichtung und/oder die Vorrichtung zum Aufkonzentrieren im Batchbetrieb mindestens einen Rührbehälter. Die Vorrichtung zum Aufkonzentrieren umfaßt bevorzugt einen Dünnschichtverdampfer, besonders bevorzugt einen mit einer Welle mit verstellbaren Rotorblättern, oder einen Dickschichtverdampfer, der bevorzugt mindestens eine Welle mit Transport- und Scherelementen enthält, wobei besonders bevorzugt an der Apparatewand ebenfalls Transport- und Scherelemente angeordnet sind.

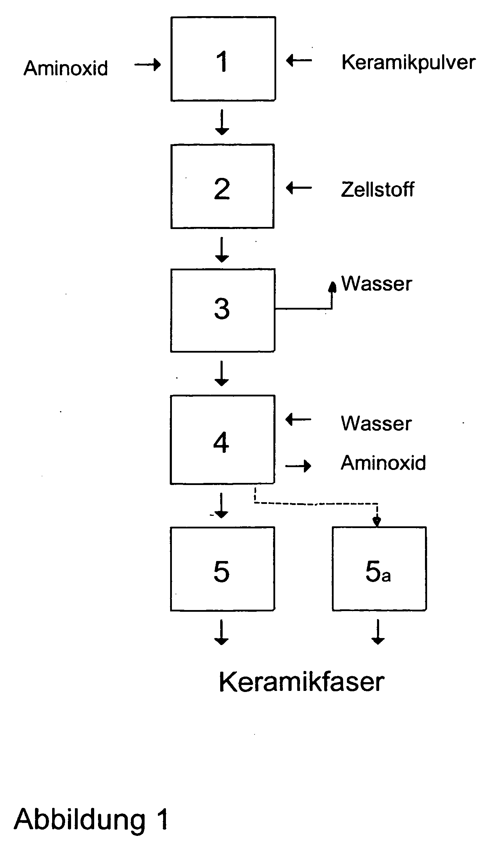

Das Zusammenspiel der Vorrichtungen ist in Abbildung 1 zu erkennen. Dabei kann während oder nach der Stufe d) die kontinuierlich Ausführung des Ablaufes unterbrochen und zeitlich oder örtlich modifiziert weitergeführt werden.

Im speziellen betrifft das den Prozeß der Grünfasersinterung und deren Weiterverarbeitung. Das einzusetzende Keramikpulver wird mit dem wäßrigen Aminoxid in einer Mischanlage (1), die neben mechanischen Rühr- und Scherelementen auch eine Ultraschallbehandlung beinhalten kann, homogen gemischt. Danach wird die erhaltene Suspension in einer zweiten Mischeinrichtung (2) mit Zellstoff gemischt. Diese Prozesse können chargenweise in zwei oder mehr parallelen Apparaten erfolgen. Die bevorzugte Verfahrensausführung sieht eine kontinuierliche Herstellung der Keramikpulver-Cellulosewäßriges Aminoxid - Suspension (im weiteren wird dafür der Ausdruck "Keramiksuspension" verwendet) vor. Bei entsprechender Auswahl der Apparate können die Prozeßstufen, die in (1) und (2) ablaufen, in einem Apparat durchgeführt werden. Die erhaltene Keramiksuspension wird im Apparat (3) unter Scherung und Wärmezufuhr einem Vakuum ausgesetzt, wobei ein definierter Teil des in der Maische enthaltenen Wassers verdampft wird. Als Resultat entsteht eine Keramikpulver-Celluloselösungs-Suspension (im weiteren als Keramiklösung bezeichnet), die fadenbildenden Charakter besitzt. Dieser Prozeß kann chargenweise in zwei oder mehr parallelen Apparaten erfolgen. Die bevorzugte Verfahrensausführung ist aber die kontinuierliche Herstellung der Keramiklösung. Die erhaltene Keramiklösung wird nun in einer Vorrichtung (4) zu Fasern versponnen. Dabei wird die Keramiklösung durch ein Formwerkzeug (Spinndüse) durch einen Luftspalt oder direkt in eine Fällflüssigkeit gepreßt, die entstandenen Fasern vom anhaftendem Aminoxid mit Waschwasser befreit. Entstehendes verdünntes überschüssiges Aminoxid kann in einer hier nicht gezeigten Vorrichtung gereinigt und aufkonzentriert und in der Vorrichtung (1) wieder zugesetzt werden. Vor oder nach dieser Wäsche werden die erhaltenen Endlosfasern zu Strängen definierter Lauflänge aufgewickelt. Die Stränge können während der Wäsche unter mechanischer Zugspannung gehalten werden, die durch das Eigengewicht bzw. durch zusätzliche Zugkräfte aufgebracht werden. Das kann sowohl durch Gewichte oder Federkräfte realisiert werden. In der Vorrichtung (4) werden die Stränge entsprechend Verfahrensschritt d) unter einer definierten Zugspannung und kontrolliert begrenztem Schrumpf getrocknet.

Die Vorrichtung (4) kann vorzugsweise so gestaltet werden, daß sie entweder gerade Keramik-Grünfasern produziert, die anschließend in einer zeitlich verzögerten und örtlich verschiedenen Vorrichtung (5a) zu Keramikfasern gesintert werden oder daß die Stränge, wie bevorzugt, unmittelbar danach in einer Vorrichtung (5) entsprechend Verfahrensschritt e) pyrolysiert und gesintert werden.

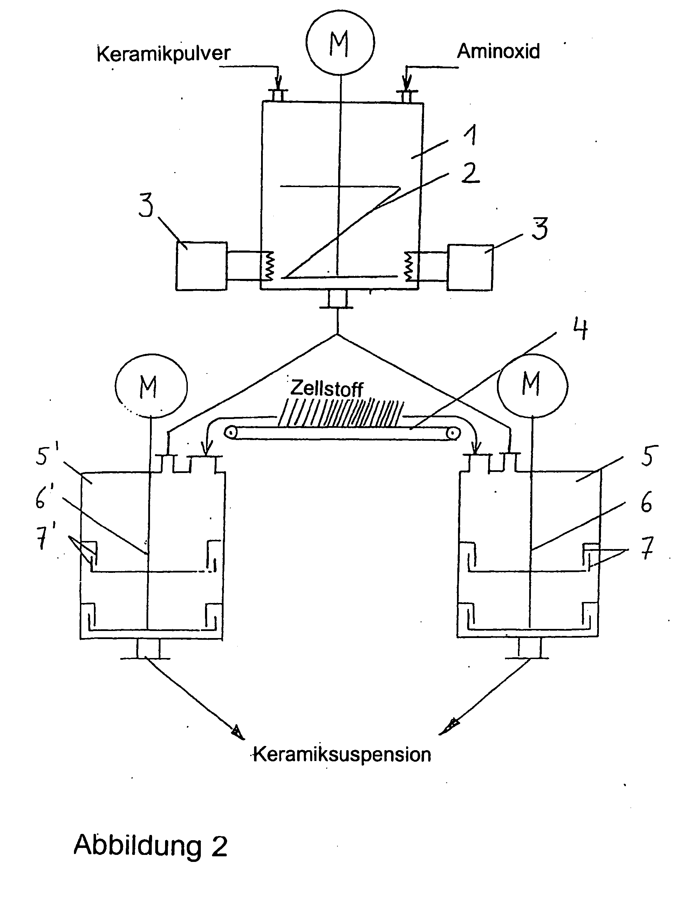

Im Abschnitt a) kann der Herstellungsprozeß der Keramiksuspension diskontinuierlich im Batchbetrieb gestaltet werden (Abb. 2). Dabei wird aus der wäßrigen Aminoxidlösung und Keramikpulver in einem Mischaggregat (1) mit Hilfe eines Rührers (2) und Ultraschallgebern (3) eine Präsuspension hergestellt. Nach Fertigstellung der Präsuspension wird diese wahlweise in die Mischbehälter (5) und (5') gegeben. Mit Hilfe eines Aufgabebandes (4) wird eine vorgegebene Menge Zellstoff ebenfalls in die Mischbehälter (5) bzw. (5') vorgelegt, wo diese unter intensiven Mischen m. H. der Rührer (6)/(6') und Schikanen (7)/(7') zu einer Keramiksuspension verarbeitet werden. Desweiteren wird die nun erhaltene Keramiksuspension in diesen Mischbehältern durch Wärmezufuhr und unter Anlegen eines Vakuums und die dadurch hervorgerufene Wasserentfernung zu einer Keramiklösung weiterverarbeitet werden (in der Abbildung nicht dargestellt).

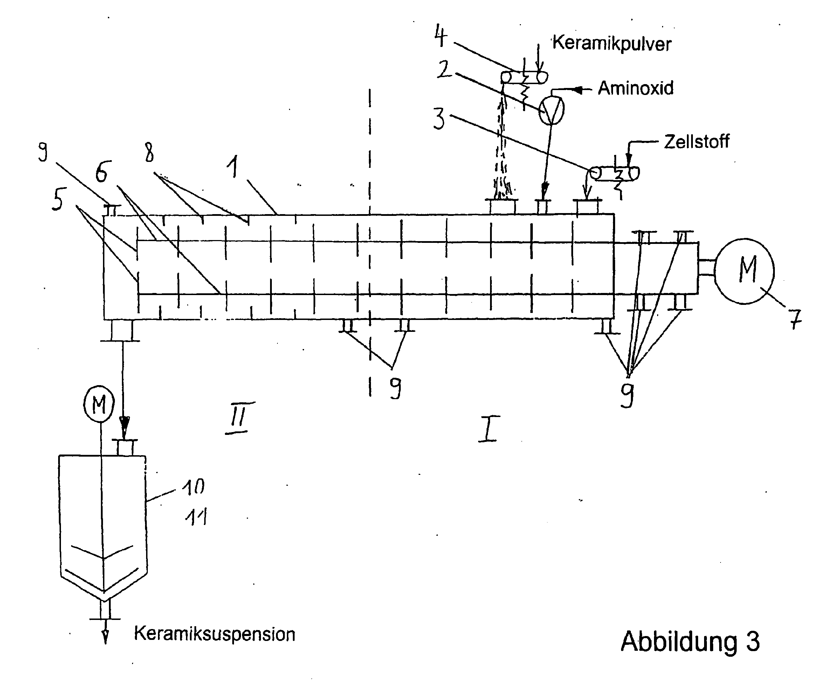

Der im Abschnitt a) beschriebene Prozeß kann aber auch kontinuierlich durchgeführt werden (Abb.3). Der dazu benutzte Apparat kann ein Zwei- oder Mehrwellenapparat sein. Ein Beispiel der Ausführungsform ist ein zweiwelliger Apparat der Serie CRP der Fa. List (CH). Der Wellenapparat (1) ist in zwei Sektionen unterteilt. In der Sektion I erfolgt die kontinuierliche Zugabe von Aminoxid, Keramikpulver und Zellstoff. Die Dosierung erfolgt durchsatz- und mengengesteuert durch eine geregelte Pumpe (2) für das wäßrige Aminoxid und über Wägeeinheiten (3) und (4) für den Zellstoff bzw. das Keramikpulver.

Der Wellenapparat ist so beschaffen, daß durch die Anordnung der Wellenelemente (5) der mit dem Motor (7) angetriebenen Wellen (6) und gegebenenfalls eingebauter Schikanen (8) am Gehäuse sowohl ein Transport, eine Zerkleinerung der Zellstoffblätter als auch eine homogene Vermischung der drei Komponenten in der Sektion II stattfinden kann. Der Apparat kann gegebenenfalls über die Welle und/oder das Gehäuse temperiert, Stutzen (9), werden. Die entstandene Suspension kann zur weiteren Verarbeitung über einen Zwischenbehälter (10) mit Rührwerk (11) zwischengespeichert werden.

Im Abschnitt b) erfolgt die Umwandlung der, Keramiksuspension in eine Keramiklösung ebenfalls kontinuierlich oder in einem Batchbetrieb.

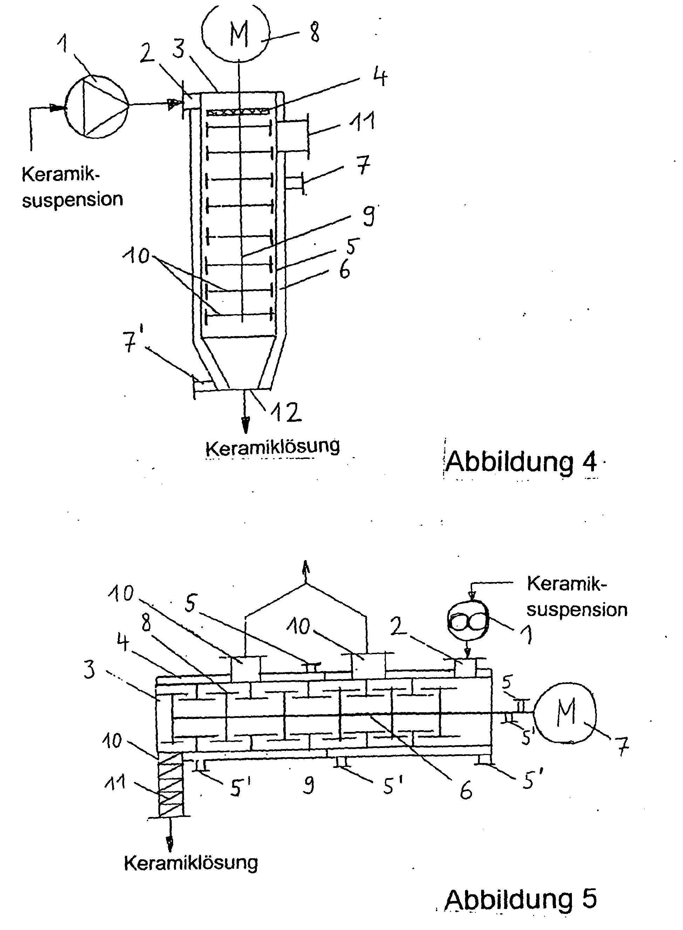

Abbildung 4 zeigt eine Vorrichtung zur Umwandlung der Keramiksuspension in eine Keramiklösung in Form eines handelsüblichen Dünnschichtverdampfers, z. B. ein Filmtruder der Fa. Buss (CH). Die Keramiksuspension gelangt über eine Dosierpumpe (1) durch den Stutzen (2) in den Dünnschichtverdampfer (3). Über den Verteilerring (4) wird die Suspension so verteilt, daß sie in einer gleichmäßigen Schicht an der feststehenden Innenwand (5) des Dünnschichters aufgetragen wird. Die Innenwand (5) ist mit einem Heizmantel (6) mit Zu- und Ableitung eines Heizmediums (7),(7') ausgerüstet, über den der Apparat temperiert wird. Dabei können mehrere Temperaturzonen gebildet werden (nicht dargestellt). Weiterhin besitzt der Apparat einen Antrieb (8) für die Welle (9), auf welcher sich mehrere Rotorblätter (10) befinden. Die Stellung und Gestaltung der Rotorblätter kann so gewählt werden, daß ihre Stellung parallel oder unter einem Neigungswinkel zur Welle eingestellt werden können. Die Rotorblätter garantieren durch ihren radialen und über die Apparatelänge konstanten oder variierbaren Abstand zur Innenwand bei Rotation eine Scher- und Mischbeanspruchung der Suspension bzw. der Lösung. Dies und das am Stutzen (11) angelegte Betriebsvakuum leiten neben einer über den Radius gleichmäßigen Wasserverdampfung den Übergang der Keramiksuspension zur Keramiklösung ein. Am Ausgang (12) verläßt die Keramiklösung den Apparat.

Abbildung 5 zeigt eine Vorrichtung zur Umwandlung der Keramiksuspension in eine Keramiklösung in Form eines handelsüblichen einwelligen Dickschichtverdampfers, z.B. der Serie Discotherm der Fa. List (CH). Es eignen sich aber auch Apparate mit zwei oder mehr Wellen ( z. B. CRP der Fa. List (CH)). In der Abbildung 5 ist der Einfachheit halber ein Einwellenapparat dargestellt. Die Keramiksuspension gelangt über eine Dosierpumpe (1) durch den Stutzen (2) in den Wellenapparat (3). Der Apparat ist über Doppelmantel (4) mit Zu- und Ableitung eines Heizmediums (5),(5') ausgerüstet, über den der Apparat temperiert wird. Dabei können mehrere Temperaturzonen gebildet werden. Ähnliches Temperieren ist über die Welle (6) realisierbar. Die Welle (6) wird durch den Motor (7) angetrieben und ist mit kompakten Hakenelementen (8) bestückt. Zur Intensivierung des Prozesses sind zwischen den bewegten Hakenelementen (8) an der Wand des Apparates Gegenhaken (9) installiert. Das Zusammenspiel von Scherspalte Haken/Gegenhaken, eingetragener Energie durch die Drehung und Scherung sowie Heizmedium und angelegtem Vakuum am Stutzen (10) ermöglicht die Überführung der Keramiksuspension in eine fadenbildende Keramiklösung. Die Lösung tritt am Stutzen (10) mit Hilfe einer Fördereinrichtung (11) aus.

Die erhaltene Keramiklösung wird erfindungsgemäß im Abschnitt c) durch verschiedenen Spinnverfahren zu Keramikfasern versponnen. In Folge sollen anhand von Abbildungen verschiedene geeignete Spinnsysteme beschrieben werden.

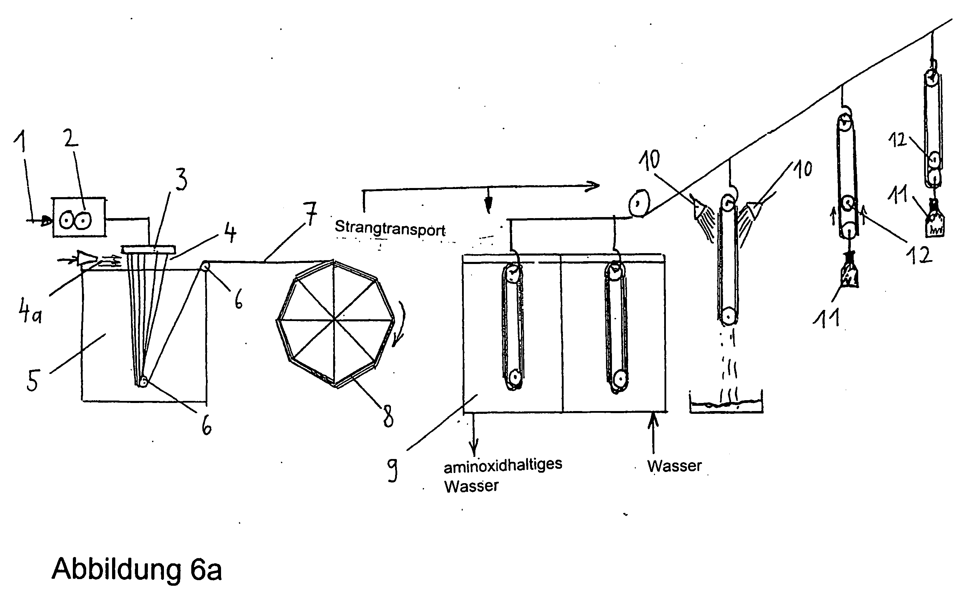

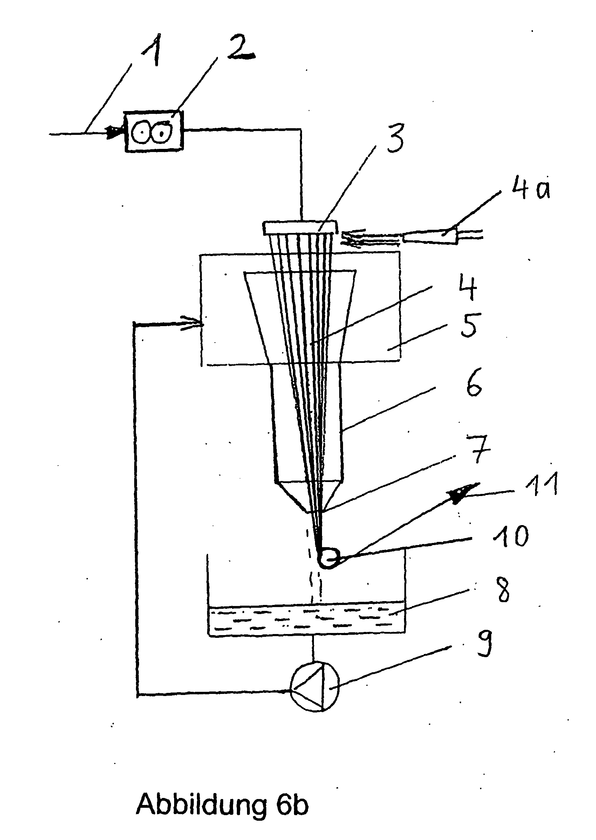

Das benutzte Spinnverfahren kann in der Ausführungsform ein Naß- oder Trocken-Naßspinnverfahren sein, wie sie aus der Herstellung von Lyocell-Fasern und Filamenten bekannt sind. Dabei kann sowohl ein Wannenspinnverfahren (Abbildung 6a) als auch ein Trichterspinnverfahren (Abbildung 6b) benutzt werden. Diese Spinnverfahren liefern in der Regel bezüglich des Querschnittes homogene Fasern. Ein weiterer Vorteil bei diesen Verfahren ist, daß profilierte Fasern (Hohlfasern, mehrschichtige Fasern) durch die Düsengestaltung herstellbar sind.

Beim Wannenspinnverfahren (Abb. 6a) gelangt die Keramiklösung durch eine mit einem Wärmeträger temperierte Doppelmantel-Rohrleitung (1) zur Dosierpumpe (2), welche die Suspension durch eine Spinndüse (3) drückt. Die Spinndüse kann rund oder viereckig, mit gleichmäßig verteilten oder auf bestimmten Flächen konzentrierten (z. B. Hütchen) Bohrungen ausgestattet sein. Nach Austritt aus der Bohrung wird das Extrudat entweder durch einen Luftspalt (4), wo es gegebenenfalls mit einem Luftstrom (4a) angeblasen werden kann, oder direkt in das Fällbad (5) gesponnen. Im Fällbad erfolgt die Koagulation der Keramiklösung zu stabilen Endlosfäden. Die Einzelfäden können durch die Umlenkrolle (6) als Kabel (7) zusammengefaßt, die entstandenen Fasern vom anhaftendem Aminoxid mit Waschwasser befreit werden. Entstehendes verdünntes überschüssiges Aminoxid kann in einer hier nicht gezeigten Vorrichtung gereinigt und aufkonzentriert und im Abschnitt a) wieder zugesetzt werden. Vor oder nach dieser Wäsche werden die erhaltenen Endlosfasern zu Strängen (8) definierter Lauflänge aufgewickelt. Die Stränge können, wie in der Abb. 6a gezeigt, während der Wäsche unter mechanischer Zugspannung gehalten werden, die durch das Eigengewicht bzw. durch zusätzliche Zugkräfte aufgebracht wird. Das kann durch Gewichte oder Federkräfte realisiert werden. Das Auswaschen des an den Strängen anhaftenden Aminoxides erfolgt durch Tauchen in Waschwasser (9) und/oder Besprühen mit Waschwasser (10). Die Stränge werden weiter entsprechend Verfahrensschritt d) unter einer definierten Zugspannung (11) und kontrolliert begrenztem Schrumpf, der z. B. durch die Haltevorrichtung (12) garantiert wird, getrocknet.

Beim Trichterspinnverfahren (Abb. 6b) gelangt die Keramiklösung durch eine mit einem Wärmeträger temperierte Doppelmantel-Rohrleitung (1) zur Dosierpumpe (2), welche die Suspension durch eine Spinndüse (3) drückt. Die Spinndüse ist vorzugsweise rund oder viereckig und mit gleichmäßig verteilten oder auf bestimmten Flächen konzentrierten (z. B. Hütchen) Bohrungen ausgestattet. Nach Austritt aus den Bohrungen wird das Extrudat entweder durch einen Luftspalt , wo es gegebenenfalls mit einem Luftstrom (4a) angeblasen werden kann, in ein Fällbad (5) oder direkt in das Fällbad (5) gesponnen. Das Fällbad (5) ist so gestaltet, daß in das Bad ein konisch zulaufender Trichter (6) mit einem Injektor (7) so eingebaut ist, daß die extrudierten Endlosfäden (4) zusammen mit der durch die Umlaufpumpe (9) aus einer Auffangwanne (8) eingespeisten Fällbadflüssigkeit in Transportrichtung beschleunigt den Injektor am unteren Ende des Trichters verlassen. Das durch die Umlenkung (10) gebündelte Faserkabel (11) wird nun, wie in Abb. 6a beschrieben, in Strängen weiterbehandelt (nicht dargestellt).

Die nach den verschiedenen Spinnverfahren hergestellten Keramik-Grünfasern können nun unmittelbar nach dem Trocknen als Strang in einem nachgeschalteten Brennofen pyrolysiert und gesintert und danach bei Bedarf geschnitten und verpackt werden. Sie können aber auch nach dem Trocknen bereits auf definierte Faserlängen geschnitten und danach im Bündel pyrolysiert und gesintert werden.

Es stelle sich erfindungsgemäß heraus, daß die Keramiklösung zu einer stabilen Erspinnung und Erzeugung von Fasern mit ausreichenden Eigenschaften einen Cellulosegehalt zwischen 0,5 - 12 % (Ma.) aufweisen kann. Vorzugsweise liegt der Gehalt zwischen 1,5 und 8 % bezogen auf das Lösungsmittel. Im Prozeß eignen sich die für eine Viskosefaserproduktion geeignetet Dissolving-Zellstoffe, Baumwolllinters ebenso wie Papierzellstoffe mit niedrigem oder mittleren DP (bis 2000). Dabei ist es unerheblich, mit welchem Herstellungsverfahren die Zellstoffe hergestellt wurden. Der keramische Anteil in der Lösung sollte zwischen 50 und 5000 % bezogen auf Cellulose sein, wobei der Vorzugsbereich 100 - 3000% beträgt. Die Durchmesser der erhaltenen Keramikfasern liegen entsprechend der Gestaltung des Prozesses zwischen 10 und 2000 µm. Zur Verarbeitung nach den beschriebenen Verfahren geeignet sind alle sich zu dem System wäßriges Aminoxid- Cellulose nahezu inert verhaltenden Pulver aus Oxiden (vorzugsweise Metalloxide, wie z.B. Aluminiumoxide, Siliziumoxide, Titanoxide, Strontiumoxide usw.), Carbiden, Boriden, Nitriden, Oxynitriden, Sialonen, und Aluminiumsilikaten. Weiterhin können alle keramikbildenden niedrig- oder hochmolekularen Verbindungen, sinterfähige anorganische Verbindungen und Bleizirkoniumtitanate eingesetzt werden. Es stellte sich heraus, daß die beste Prozeßführung mit tertiären Aminoxiden, vorzugsweise mit N-Methylmorpholin-N-Oxid, als Lösungsmittel für die Cellulose verzeichnet wird. Zur Stabilisierung der Suspension können Substanzen zugesetzt werden, die eine thermische Zersetzung verhindern. So kann beispielsweise ein Stabilisatorensystem aus Natronlauge oder aus Natronlauge und Gallussäurepropylester mit gegebenenfalls weiteren stabilisierend wirkenden Substanzen benutzt werden.

Für die kontinuierlich unter Spannung getrockneten Fasern wird bevorzugt ein definierter Schrumpf zwischen 0,5 und 20 %, vorzugsweise zwischen 5 und 15 %, eingestellt.

### [Bezugszeichenliste]

### Abbildung 1:

- 1: Mischvorrichtung 1
- 2: Mischvorrichtung 2
- 3: Apparat 3 (Vakuum) / Wasserverdampfung
- 4: Vorrichtung zur Faserverspinnung
- 5 a: Sintervorrichtung
- 5: Pyrolyse- und Sintervorrichtung,

### Abbildung 2:

- 1: Mischaggregat
- 2: Rührer
- 3: Ultraschallgeber
- 4: Aufgabeband
- 5 und 5': Mischbehälter
- 6 und 6': Rührer
- 7 und 7': Schikanen

### Abbildung 3:

- 1: Wellenapparat
- 2: Dosierungspumpe
- 3: Wägeeinheit für Zellstoff
- 4: Wägeeinheit für Keramikpulver
- 5: Wellenelemente
- 6: Welle
- 7: Antriebsmotor
- 8: Schikanen
- 9: Anschlußstutzen
- 10: Zwischenbehälter
- 11: Rührwerk

### Abbildung 4:

- 1: Dosierpumpe
- 2: Stutzen für Keramiksuspension
- 3: Dünnschichtverdampfer
- 4: Verteilerring
- 5: Innenwand
- 6: Heizmantel
- 7: Heizmediumzuleitung
- 7': Heizmediumableitung
- 8: Antrieb
- 9: Welle
- 10: Rotorblätter
- 11: Stutzen für Vakuum
- 12: Ausgang

### Abbildung 5:

- 1: Dosierpumpe
- 2: Stutzen (Keramiksuspension)
- 3: Wellenapparat
- 4: Doppelmantel
- 5: Zuleitung Heizmedium
- 5: Ableitung Heizmedium
- 6: Welle
- 7: Antriebsmotor
- 8: Hakenelemente
- 9: Gegenhaken
- 10: Stutzen (Vakuum)
- 11: Fördereinrichtung

### Abbildung 6a

- 1: Doppelmantel-Rohrleitung
- 2: Dosierpumpe
- 3: Spinndüse
- 4: luftspalt
- 4a: Luftstrom
- 5: Fällbad
- 6: Umlenkrolle
- 7: Kabel (zusammengefaßte Einzelfäden)
- 8: Faserstränge
- 9 und 10: Waschwasser
- 11: Zugspannung
- 12: Haltevorrichtung zur Schrumpfbegrenzung

### Abbildung 6b

- 1: Doppelmantel-Rohrleitung
- 2: Dosierpumpe
- 3: Spinndüse
- 4: extrudierte Endlosfäden
- 4a: Luftstrom
- 5: Fällbad
- 6: Trichter
- 7: Injektor
- 8: Auffangwanne
- 9: Umlaufpumpe
- 10: Umlenkung
- 11: Faserkabel

## Patentansprüche

1. Verfahren zur Herstellung von geraden Keramikfasern, **dadurch gekennzeichnet, daß** es die folgenden Schritte umfaßt:
a) Mischen von Keramikpulver, wäßrigem Aminoxid und Cellulose, so daß sich eine Suspension bildet;
b) Aufkonzentrieren der Suspension aus a), die unter Erwärmen gemischt, geschert und unter Abdampfen von Wasser transportiert wird, bis eine Suspension des Keramikpulvers in einer verformbaren Lösung von Cellulose in wäßrigem Aminoxid entstanden ist;
c) Pressen der gemäß b) erhaltenen Suspension durch ein Formwerkzeug zu Endlosfasern, Aufwickeln der Endlosfasern zu Strängen und Auswaschen der Stränge;
d) Trocknen der gemäß c) erhaltenen Stränge unter einer Vorspannung und definiertem Gesamtschrumpf zu geraden Grünfasern;
e) Verarbeiten der getrockneten Grünfasern unter Eigengewicht oder einer definierten Spannung durch Pyrolysieren und Sintern zu geraden Keramikfasern.

2. Verfahren nach Anspruch 1, **dadurch gekennzeichnet, daß** in Schritt a) ein Keramikpulver aus keramikbildenden niedrig- oder hochmolekularen Verbindungen, bevorzugt aus sinterfähigen anorganischen Verbindungen, besonders bevorzugt aus Oxiden, Carbiden, Boriden, Nitriden, Oxynitriden, Sialonen, Aluminiumsilikaten oder deren Mischungen und/oder aus Bleizirkoniumtitanaten, eingesetzt wird.

3. Verfahren nach Anspruch 1, **dadurch gekennzeichnet, daß** in Schritt a) die Cellulose in Form von Dissolving- oder Papierzellstoff oder BaumwollLinters eingesetzt wird.

4. Verfahren nach den Ansprüchen 1 bis 3, **dadurch gekennzeichnet, daß** als Aminoxid N-Methylmorpholin-N-Oxid eingesetzt wird.

5. Verfahren nach Anspruch 1, **dadurch gekennzeichnet, daß** der Anteil der Cellulose in der in Schritt b) erzeugten Suspension 0,5 bis 12 Gew.-%, vorzugsweise von 1,5 bis 8 Gew.-%, bezogen auf das Gewicht des wäßrigen Aminoxids, beträgt.

6. Verfahren nach Anspruch 1, **dadurch gekennzeichnet, daß** der Anteil des Keramikpulvers in Schritt b) 10 bis 5000 Gew.-%, vorzugsweise 50 bis 3000 Gew.-%, bezogen auf das Gewicht der Cellulose, beträgt.

7. Verfahren nach Anspruch 1, **dadurch gekennzeichnet, daß** in Schritt a) neben dem Mischen eine Ultraschallbehandlung durchgeführt wird.

8. Verfahren nach Anspruch 1, **dadurch gekennzeichnet, daß** in Schritt c) die Fasern nach einem Naßspinnverfahren, einem Trocken-Naßspinnverfahren, einem Wannenspinnverfahren oder einem Trichterspinnverfahren hergestellt werden.

9. Verfahren nach einem oder mehreren der Ansprüche 1 bis 8, **dadurch gekennzeichnet, daß** die Extrusionstechnik so ausgewählt wird, daß runde und/oder profilierte und/oder mehrschichtige und/oder hohle Fasern erhalten werden.

10. Verfahren nach einem oder mehreren der Ansprüche 1 bis 9, **dadurch gekennzeichnet, daß** die aus dem Formwerkzeug austretenden Endlosfasern zu Strängen definierter Lauflänge gewickelt werden.

11. Verfahren nach einem oder mehreren der Ansprüche 1 bis 10, **dadurch gekennzeichnet, daß** das Auswaschen des in den Fasern befindlichen Aminoxids unmittelbar nach der Extrusion erfolgt und gegebenenfalls die Endlosfasern zu Strängen definierter Lauflänge gewickelt werden.

12. Verfahren nach Anspruch 1, **dadurch gekennzeichnet, daß** das Auswaschen der Stränge unter dem Eigengewicht oder unter einer Zugspannung, die durch Gewichte oder Federkräfte entsteht, erfolgt.

13. Verfahren nach einem oder mehreren der Ansprüche 1 bis 12, **dadurch gekennzeichnet, daß** die Faserstränge unter Spannung getrocknet werden, wobei ein definierter Schrumpf zwischen 0,5 und 20 %, vorzugsweise zwischen 5 und 15%, eingestellt wird.

14. Verfahren nach einem oder mehreren der Ansprüche 1 bis 13, **dadurch gekennzeichnet, daß** die Grünfaserstränge unmittelbar nach dem Trocknen als Strang pyrolysiert und gesintert werden.

15. Verfahren nach einem oder mehreren der Ansprüche 1 bis 13, **dadurch gekennzeichnet, daß** die Grünfaserstränge nach dem Trocknen auf definierte Faserlängen geschnitten und danach im Bündel pyrolysiert und gesintert werden.

16. Verfahren nach einem oder mehreren der Ansprüche 1 bis 15, **dadurch gekennzeichnet, daß** die Fasern kontinuierlich unter Spannung getrocknet werden, wobei ein definierter Schrumpf zwischen 0,5 und 20 %, vorzugsweise zwischen 5 und 15 %, eingestellt wird.

17. Verfahren nach einem oder mehreren der Ansprüche 1 bis 16, **dadurch gekennzeichnet, daß** die getrockneten Grünfasern zu Stücken geschnitten und anschließend pyrolysiert und gesintert werden.

18. Verfahren nach einem oder mehreren der Ansprüche 1 bis 17, **dadurch gekennzeichnet, daß** der Durchmesser der Fasern bei der Formgebung so eingestellt wird, daß nach dem Sintervorgang Werte zwischen 10 und 2000 µm erhalten werden.

19. Verfahren nach einem oder mehreren der Ansprüche 1 bis 18, **dadurch gekennzeichnet, daß** das Keramikpulver so gewählt wird, daß die Keramikfasern piezoelektrische Eigenschaften aufweisen.

20. Vorrichtung zur Herstellung von geraden Keramikfasern, im wesentlichen enthaltend
a) eine Mischvorrichtung zur Herstellung einer Suspension aus Keramikpulver, wäßrigem Aminoxid und Cellulose,
b) eine Vorrichtung zum Aufkonzentrieren, in der die in a) hergestellte Suspension so lange unter Erwärmen intensiv gemischt, geschert und unter Abdampfen von Wasser transportiert werden kann, bis eine genau definierte Menge an Wasser abgedampft ist und eine Suspension von Keramikpulver in einer verformbaren Lösung der Cellulose in wäßrigem Aminoxid entsteht,
c) eine Vorrichtung, die der unter b) genannten nachgeschaltet ist oder mit ihr verbunden sein kann, worin die Suspension von Keramikpulver in einer verformbaren Lösung der Cellulose in wäßrigem Aminoxid durch ein Formwerkzeug zu Endlosfasern gepreßt, zu Strängen aufgewickelt und ausgewaschen werden kann,
d) eine Trockenvorrichtung, in der die in c) erhaltenen Stränge unter einer Vorspannung und definiertem Gesamtschrumpf zu geraden Grünfasern getrocknet werden können, und
e) eine Pyrolyse- und Sintereinrichtung, in der die getrockneten Grünfaserstränge unter Eigengewicht oder einer definierten Spannung zu geraden Keramikfasern verarbeitet werden können.

21. Vorrichtung nach Anspruch 20, **dadurch gekennzeichnet, daß** die Mischvorrichtung ein kontinuierlicher Zwei- oder Mehrwellenapparat mit Misch-, Transport und Scherwirkung ist.

22. Vorrichtung nach Anspruch 20 oder 21, **dadurch gekennzeichnet, daß** die Mischvorrichtung und/oder die Vorrichtung zum Aufkonzentrieren im Batchbetrieb mindestens einen Rührbehälter umfaßt.

23. Vorrichtung nach einem oder mehreren der Ansprüche 20 bis 22, **dadurch gekennzeichnet, daß** die Vorrichtung zum Aufkonzentrieren einen Dünnschichtverdampfer, bevorzugt einen mit einer Welle mit verstellbaren Rotorblättern, umfaßt.

24. Vorrichtung nach Anspruch 20 oder 21, **dadurch gekennzeichnet, daß** die Vorrichtung zum Aufkonzentrieren einen Dickschichtverdampfer umfaßt, der bevorzugt mindesten eine Welle mit Transport- und Scherelementen enthält, wobei besonders bevorzugt an der Apparatewand ebenfalls Transport- und Scherelemente angeordnet sind.

## Claims

1. A process for producing straight ceramic fibers, **characterized in that** it comprises the following steps:
a) mixing ceramic powder, aqueous amine oxide and cellulose to form a suspension;
b) concentrating the suspension from a), which while undergoing heating is mixed, sheared and transported while undergoing evaporative removal of water until a suspension of the ceramic powder in a formable solution of cellulose in aqueous amine oxide has formed;
c) pressing the suspension obtained as per b) through a shaping tool to form continuous filament fibers, winding up the continuous filament fibers to form strands and washing off the strands;
d) drying the strands obtained as per c) under a pre-tension and with defined overall shrinkage to form straight green fibers;
e) processing the dried green fibers under their own weight or under a defined tension by pyrolyzing and sintering to form straight ceramic fibers.

2. A process according to claim 1, **characterized in that** step a) utilizes a ceramic powder composed of ceramic-forming low or high molecular weight compounds, preferably of sinterable inorganic compounds, particularly preferably of oxides, carbides, borides, nitrides, oxynitrides, sialons, aluminum silicates or their mixtures and/or of lead zirconium titanates.

3. A process according to claim 1, **characterized in that** step a) utilizes the cellulose in the form of dissolving or paper grade pulp or cotton linters.

4. A process according to claims 1 to 3, **characterized in that** the amine oxide used is N-methylmorpholine N-oxide.

5. A process according to claim 1, **characterized in that** the fraction of cellulose in the suspension generated in step b) is 0.5% to 12% by weight and preferably 1.5% to 8% by weight based on the weight of the aqueous amine oxide.

6. A process according to claim 1, **characterized in that** the fraction of ceramic powder in step b) is 10% to 5 000% by weight and preferably 50% to 3 000% by weight based on the weight of the cellulose.

7. A process according to claim 1, **characterized in that** step a) utilizes an ultrasound treatment as well as mixing.

8. A process according to claim 1, **characterized in that** step c) produces the fibers by a wet-spinning process, a dry-jet wet-spinning process, a trough spinning process or a funnel spinning process.

9. A process according to one or more of claims 1 to 8, **characterized in that** the extrusion technique is chosen so that round and/or profiled and/or multilayered and/or hollow fibers are obtained.

10. A process according to one or more of claims 1 to 9, **characterized in that** the endless filament fibers emerging from the shaping tool are wound up to form strands of defined running length.

11. A process according to one or more of claims 1 to 10, **characterized in that** the amine oxide in the fibers is washed off immediately after extrusion and optionally the continuous filament fibers are wound up to form strands of defined running length.

12. A process according to claim 1, **characterized in that** the strands are washed off under their own weight or under a pulling tension due to weights or spring forces.

13. A process according to one or more of claims 1 to 12, **characterized in that** the fiber strands are dried under tension to a defined shrinkage between 0.5 and 20% and preferably between 5 and 15%.

14. A process according to one or more of claims 1 to 13, **characterized in that** the green fiber strands obtained are immediately after drying strand pyrolyzed and sintered.

15. A process according one or more of claims 1 to 13, **characterized in that** the green fiber strands after drying are cut to defined fiber lengths and thereafter bundle pyrolyzed and sintered.

16. A process according to one or more of claims 1 to 15, **characterized in that** the fibers are dried continuously under tension to a defined shrinkage between 0.5 and 20% and preferably between 5 and 15%.

17. A process according to one or more of claims 1 to 16, **characterized in that** the dried green fibers are cut into pieces and subsequently pyrolyzed and sintered.

18. A process according to one or more claims 1 to 17, **characterized in that** the fiber diameter is adjusted result in to values between 10 and 2 000 µm after the sintering operation.

19. A process according to one or more of claims 1 to 18, **characterized in that** the ceramic powder is chosen such that the ceramic fibers have piezoelectric properties.

20. A device for producing straight ceramic fibers, containing essentially
a) a mixing device for producing a suspension of ceramic powder, aqueous amine oxide and cellulose;
b) a device for concentrating, in which the suspension produced in a) while undergoing heating can be intensively mixed, sheared and transported while undergoing evaporative removal of water until a precisely defined amount of water has evaporated off and a suspension of ceramic powder in a formable solution of cellulose in aqueous amine oxide has formed,
c) a device which is downstream to that mentioned under b) or can be connected to it and wherein the suspension of ceramic powder in a formable solution of the cellulose in aqueous amine oxide can be pressed through a shaping tool to form continuous filament fibers, wound up to form strands and washed off,
d) a drying device in which the strands obtained in c) can be dried under a pre-tension and with defined overall shrinkage to form straight green fibers, and
e) a pyrolysis and sintering means in which the dried green fibers can be processed under their own weight or under a defined tension to form straight ceramic fibers.

21. A device according to claim 20, **characterized in that** the mixing device is a continuous assembly having two or more shafts and a mixing, transporting and shearing action.

22. A device according to claim 20 or 21, **characterized in that** the mixing device and/or the device for concentrating comprises at least one stirred vessel in batch operation.

23. A device according to one or more of claims 20 to 22, **characterized in that** the device for concentrating comprises a thin film evaporator, preferably one having a shaft with adjustable rotor blades.

24. A device according to claim 20 or 21, **characterized in that** the device for concentrating comprises a thick film evaporator which preferably contains at least one shaft having transporting and shearing elements, it being particularly preferable for transporting and shearing elements likewise to be disposed on the assembly wall.

## Revendications

1. Procédé pour la production de fibres céramiques droites, **caractérisé en ce qu'**il comprend les étapes suivantes :
a) mélange de poudre de céramique, oxyde d'amine aqueux et cellulose, de manière qu'il se forme une suspension ;
b) concentration de la suspension provenant de a), qui est homogénéisée à chaud, cisaillée et transportée avec évaporation d'eau, jusqu'à l'obtention d'une suspension de la poudre de céramique dans une solution apte à la mise en forme, de cellulose dans de l'oxyde d'amine aqueux ;
c) pressage de la suspension obtenue selon b), au moyen d'un outil de formage, en fibres continues, enroulement des fibres continues en écheveaux et lavage des écheveaux ;
d) séchage des écheveaux obtenus en c) sous une pré-tension et avec un retrait total défini, pour l'obtention de fibres crues droites ;
e) transformation des fibres crues séchées en fibres céramiques droites par pyrolyse et frittage sous leur propre poids ou sous une tension définie.

2. Procédé selon la revendication 1, **caractérisé en ce que** dans l'étape a) on utilise une poudre de céramique à base de composés susceptibles de former une céramique de faible masse moléculaire ou de masse moléculaire élevée, de préférence à base de composés inorganiques aptes au frittage, de façon particulièrement préférée à base d'oxydes, de carbures, de borures, de nitrures, d'oxynitrures, de sialons, de silicates d'aluminium ou de mélanges de ceux-ci et/ou de titanates de plomb-zirconium.

3. Procédé selon la revendication 1, **caractérisé en ce que** dans l'étape a) la cellulose est utilisée sous forme de pâte à papier ou de pâte dissolvante ou bien de linter de coton.

4. Procédé selon les revendications 1 à 3, **caractérisé en ce que** comme oxyde d'amine on utilise du N-méthylmorpholine-N-oxyde.

5. Procédé selon la revendication 1, **caractérisé en ce que** la proportion de la cellulose dans la suspension produite dans l'étape b) va de 0,5 à 12 % en poids, de préférence de 1,5 à 8 % en poids, par rapport au poids de l'oxyde d'amine aqueux.

6. Procédé selon la revendication 1, **caractérisé en ce que** la proportion de la poudre de céramique dans l'étape b) va de 10 à 5 000 % en poids, de préférence de 50 à 3 000 % en poids, par rapport au poids de la cellulose.

7. Procédé selon la revendication 1, **caractérisé en ce que** dans l'étape a) on effectue en plus du mélange un traitement par ultrasons.

8. Procédé selon la revendication 1, **caractérisé en ce que** dans l'étape c) les fibres sont produites selon un procédé de filage par voie humide, un procédé de filage par voie sèche, un procédé de filage en cuve ou un procédé de filage à entonnoir.

9. Procédé selon une ou plusieurs des revendications 1 à 8, **caractérisé en ce que** la technique d'extrusion est choisie de manière à obtenir des fibres rondes et/ou profilées et/ou multicouches et/ou creuses.

10. Procédé selon une ou plusieurs des revendications 1 à 9, **caractérisé en ce que** les fibres continues sortant de l'outil de formage sont enroulées en écheveaux de longueur définie.

11. Procédé selon une ou plusieurs des revendications 1 à 10, **caractérisé en ce que** l'élimination par lavage de l'oxyde d'amine présent dans les fibres s'effectue immédiatement après l'extrusion et éventuellement les fibres continues sont enroulées en écheveaux de longueur définie.

12. Procédé selon la revendication 1, **caractérisé en ce que** le lavage des écheveaux s'effectue sous leur propre poids ou sous une tension de tirage qui est due à des poids ou à des ressorts.

13. Procédé selon une ou plusieurs des revendications 1 à 12, **caractérisé en ce que** les écheveaux de fibres sont séchés sous tension, avec ajustement d'un retrait défini, compris entre 0,5 et 20 %, de préférence entre 5 et 15 %.

14. Procédé selon une ou plusieurs des revendications 1 à 13, **caractérisé en ce que** les écheveaux de fibres crues sont pyrolysés et frittés sous forme d'écheveau immédiatement après le séchage.

15. Procédé selon une ou plusieurs des revendications 1 à 13, **caractérisé en ce que** les écheveaux de fibres crues après le séchage sont coupés à des longueurs de fibres définies et ensuite pyrolysés et frittés en faisceaux.

16. Procédé selon une ou plusieurs des revendications 1 à 15, **caractérisé en ce que** les fibres sont séchées en continu sous tension, avec ajustement d'un retrait défini, compris entre 0,5 et 20 %, de préférence entre 5 et 15 %.

17. Procédé selon une ou plusieurs des revendications 1 à 16, **caractérisé en ce que** les fibres crues séchées sont coupées en segments en ensuite pyrolysées et frittées.

18. Procédé selon une ou plusieurs des revendications 1 à 17, **caractérisé en ce que** le diamètre des fibres est ajusté lors du formage de manière à obtenir après l'opération de frittage des valeurs comprises entre 10 et 2 000 µm.

19. Procédé selon une ou plusieurs des revendications 1 à 18, **caractérisé en ce que** la poudre de céramique est choisie de manière que les fibres céramiques présentent des propriétés piézoélectriques.

20. Dispositif pour la production de fibres de céramiques droites, comportant essentiellement
a) un dispositif de mélange pour la préparation d'une suspension de poudre de céramique, oxyde d'amine aqueux et cellulose,
b) un dispositif pour la concentration, dans lequel la suspension préparée en a) peut être homogénéisée intensément avec chauffage, cisaillée et transportée avec évaporation d'eau, jusqu'à ce qu'une quantité exactement définie d'eau soit évaporée et qu'il en résulte une suspension de poudre de céramique dans une solution, apte à être mise en forme, de la cellulose dans l'oxyde d'amine aqueux,
c) un dispositif qui peut être placé après celui indiqué en b) ou être relié à celui-ci, dans lequel la suspension de poudre de céramique dans une solution, apte à être mise en forme, de la cellulose dans l'oxyde d'amine aqueux est pressée en fibres continues au moyen d'un outil de formage, enroulée en écheveaux et lavée,
d) un dispositif de séchage, dans lequel les écheveaux obtenus en c) peuvent être séchés en fibres crues droites, sous une pré-tension et avec un retrait total défini, et
e) un dispositif de pyrolyse et de frittage, dans lequel les écheveaux de fibres crues séchés peuvent être transformés, sous leur propre poids ou sous une tension définie, en fibres céramiques droites.

21. Dispositif selon la revendication 20, **caractérisé en ce que** le dispositif de mélange est un appareil à deux ou plus de deux arbres, avec effet de mélange, de transport et de cisaillement.

22. Dispositif selon la revendication 20 ou 21, **caractérisé en ce que** le dispositif de mélange et/ou le dispositif pour la concentration dans le fonctionnement en mode discontinu comprend au moins un récipient d'agitation.

23. Dispositif selon une ou plusieurs des revendications 20 à 22, **caractérisé en ce que** le dispositif pour la concentration comprend un évaporateur à couche mince, de préférence un évaporateur présentant un arbre à pales de rotor réglables.

24. Dispositif selon la revendication 20 ou 21, **caractérisé en ce que** le dispositif pour la concentration comprend un évaporateur à couche mince, qui contient de préférence au moins un arbre à éléments de cisaillement et de transport, des éléments de cisaillement et de transport étant de façon particulièrement préférée également disposés sur la paroi de l'appareil.
